(19) Europäisches Patentamt

European Patent Office

Office européen des brevets

(11) **EP 1 675 337 A1**

(12) **EUROPEAN PATENT APPLICATION**

(43) Date of publication:
**28.06.2006   Bulletin 2006/26**

(51) Int Cl.:
***H04L 25/03*** *(2006.01)*

(21) Application number: **04256383.3**

(22) Date of filing: **15.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
- **Mitsubishi Electric Information Technology Centre**
  **Europe B.V.**
  **Guildford,**
  **Surrey GU2 7YD (GB)**
  Designated Contracting States:
  **GB**
- **MITSUBISHI DENKI KABUSHIKI KAISHA**
  **Chiyoda-ku**
  **Tokyo 100-8310 (JP)**
  Designated Contracting States:
  **AT BE BG CH CY CZ DE DK EE ES FI FR GR HU IE IT LI LU MC NL PL PT RO SE SI SK TR**

(72) Inventors:
- **Chen, Nongji**
  **Guildford,**
  **Surrey (GB)**
- **Heaton, Robert**
  **Ash Green**
  **Aldershot (GB)**

(74) Representative: **Burke, Steven David et al**
**R.G.C. Jenkins & Co.**
**26 Caxton Street**
**London SW1H 0RJ (GB)**

(54) **Frequency domain equaliser for single-carrier signals**

(57)    A receiver for a single carrier system in which symbols are transmitted in blocks uses both frequency domain and time domain equalisation, the time domain equalisation generating equalisation values on the basis of differences between preceding frequency-domain-equalised symbols and the values into which those symbols were classified.

FIG. 7

EP 1 675 337 A1

**Description**

BACKGROUND OF THE INVENTION

Field of the Invention

The invention relates to the processing of a received signal in a single carrier frequency domain equalised (SC-FDE) communication system.

Description of the Prior Art

Wireless communication systems suffer from problems due to the distortions caused by the radio propagation channel conditions and external interference signals. To combat this, equalisation techniques are commonly used in receivers that aim to reverse the distortions. In general, the use of channel equalisers in wireless receivers will yield improved system performance but also lead to some added system complexity and cost.

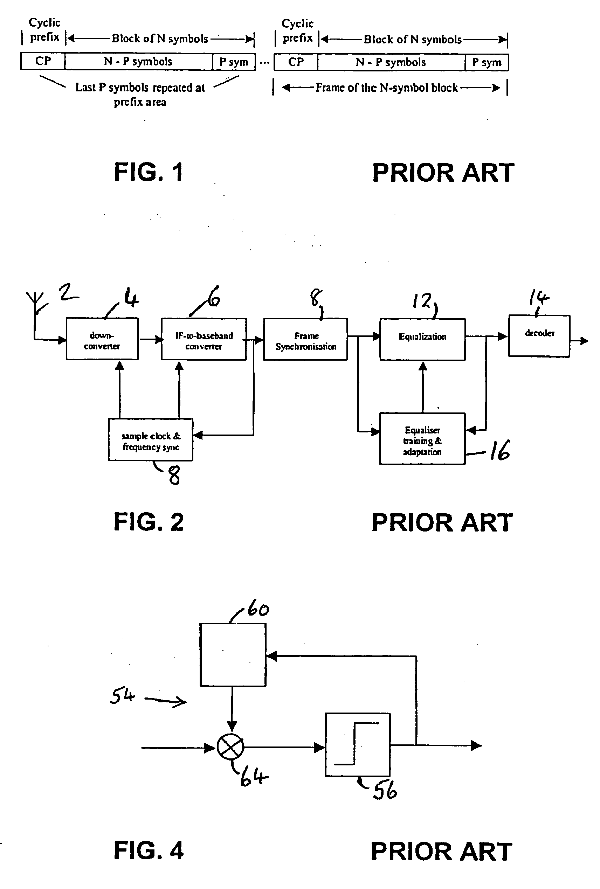

Recently, the transmission of data in the form of blocks has gained increased popularity in communication systems. Figure 1 shows an example of the structure of the transmitted data. Each block, or frame, comprises N symbols, the last P of which are identical to the symbols in a cyclic prefix CP which is normally inserted at the beginning of the block. Such a frame structure can be used in single or multi carrier based systems. In such systems, the channel equalisation task can be conveniently and economically undertaken in the frequency domain through appropriate FFT (Fast Fourier Transform) operations. A number of wireless LAN and digital broadcasting standards have adopted this frame structure and made use of the orthogonal frequency division multiplexing (OFDM) technique. While adequate in many aspects for the intended tasks, the OFDM based technologies have a profoundly uneconomic shortcoming, i.e. a generally high peak-to-average-power-ratio (PAPR) due to the densely packed multi-carrier nature of the signals. In comparison, single carrier with cyclic prefix insertion is an alternative signal format that can similarly benefit from the advantages of equalising the channel distortion in the frequency domain through computationally efficient FFT operations. As a single carrier system, the signal power envelope can be made virtually constant thus eliminating the requirement for backing-off the power amplifier as is typically done in OFDM systems. Single carrier based systems are also less sensitive to the nonlinearities that typically come with the power signal components, resulting potential cost reductions in end products.

The introduction of a cyclic prefix (or postfix) to a block structure, as shown in Figure 1, helps to make the fundamentally linear convolution between the transmitted signal frame and the channel impulse response (CIR) appear cyclic. This property has a corresponding frequency domain relationship that can be expressed as the multiplication of the discrete Fourier transform (DFT) of the transmitted signal with that of the channel frequency response. If the prevailing channel frequency response can be estimated with a sufficient accuracy, for example through the use of training symbols, the distortions caused by the channel can be removed through division operations, or their equivalents, on the received signal. This can be carried out on the signal frequency bins using the inverse of the corresponding channel frequency response (i.e. de-convolution in the frequency domain).

A further performance improvement was observed in the prior art where a decision feedback equalisation (DFE) branch was added to the basic SC-FDE scheme, i.e. SC-FDE/DFE, (see N. Benvenuto & S. Tomasin, "Frequency Domain FDE: System Design and Comparison with OFDM", available at: http://citeseer.nj.nec.com/559726.html and D. Falconer, S. Lek Ariyavisitakul, Anader Benyamin-Seeyarm B. Eidison, "Frequency Domain Equalization for Single-Carrier Broadband Wireless Systems", White Paper, available at: www.sce.carleton.ca/bbw/papers/Ariyavisitakul.pdf). The decision feedback equalisation (DFE) process involves a transversal filter which receives at its input the classified symbol values from a decision block and has an output which modifies the symbol values sent to the decision block.

Whilst this approach offers the potential to benefit from augmenting SC-FDE with the well-known decision feedback approach in single carrier systems, the inherent coupling between the FDE parameters and those of the decision feedback equaliser make the technique difficult. It is difficult to determine the parameters during training as well as during normal adaptation. This has resulted in a set of very complex formulae for the determination of equalisation parameters. In order to alleviate this complexity in implementation, it has been suggested that the number of DFE coefficients should be limited to the lowest possible number (typical values being one or two) based on some pre-knowledge of the channel. Such an approach, although it marginally improves the tractability of the problem, severely limits the realisation of the potential of decision directed feedback in the system.

SUMMARY OF THE INVENTION

Aspects of the present invention are set out in the accompanying claims.

The preferred embodiment described below uses a decision correction based feedback (DCF) scheme for the generation of 'equalising' values for each of the received single carrier symbols, after frequency domain equalisation (FDE) has been accomplished. The decision correction based feedback scheme involves modifying the symbol values sent to a symbol classifier in accordance with the <u>differences</u> between the values from the FDE output and those of the decision output from the symbol classifier. This yields an improved system performance with lowered bit error rate (BER) in the recovered data stream. Training and adaptation of the associated parameters in both the FDE and DCF functions become more straightforward and substantially simpler when compared with prior art approaches.

This invention can thus improve the performance of a single carrier system operating with block data, decouple the parameters of the frequency and time domain equalisers, reduce the complexity of the parameter optimisation and adaptation processes and reduce the costs of implementation.

Because the optimisations of the FDE and DCF parameters are separable, the training and online adaptation tasks become simpler as well as flexible. For example, one may choose to optimise both sets of parameters during a training phase but undertake online adaptation only on the DCF parameters afterwards.

BRIEF DESCRIPTION OF THE DRAWINGS

Arrangements embodying the invention will now be described by way of example with reference to the accompanying drawings, in which:

FIG. 1 is an illustration of an exemplary block structure of time domain data symbols augmented with a prefix;

FIG. 2 is a block diagram that depicts a digital data communication receiver arrangement;

FIG. 3 is a block diagram that depicts the functions of a communications system at the baseband level;

FIG. 4 is a block diagram illustrating a decision feedback equalisation (DFE) technique of the prior art;

FIG. 5 is a block diagram illustrating a decision correction based feedback (DCF) technique of the present invention;

FIG. 6 is a block diagram of a component which generates DCF compensation values; and

FIG. 7 is a block diagram that depicts components used for parameter adaptation in a receiver according to the present invention.

DETAILED DESCRIPTION OF THE PREFERRED EMBODIMENTS

Figure 2 is a block diagram of a prior art receiver in which the techniques of the present invention can be incorporated. An antenna 2 receives a signal which is then delivered to a down-converter 4 for converting the signal to intermediate frequency (IF). The signal is then converted to baseband by an IF-to-baseband converter 6. The output of the converter 6 is fed back to a sample clock and frequency synchronising circuit 8 which controls the operations of the down-converter 4 and the IF-to-baseband converter 6.

The baseband signal is also delivered to a frame synchronisation circuit 8 in order to extract the blocks of symbols. The symbols are then subject to equalisation in an equalisation circuit 12, and then delivered to a decoder 14.

The equalisation circuit 12 operates using equalisation coefficients which can be modified during a training operation and adapted during normal operation, using an equaliser training and adaptation circuit 16.

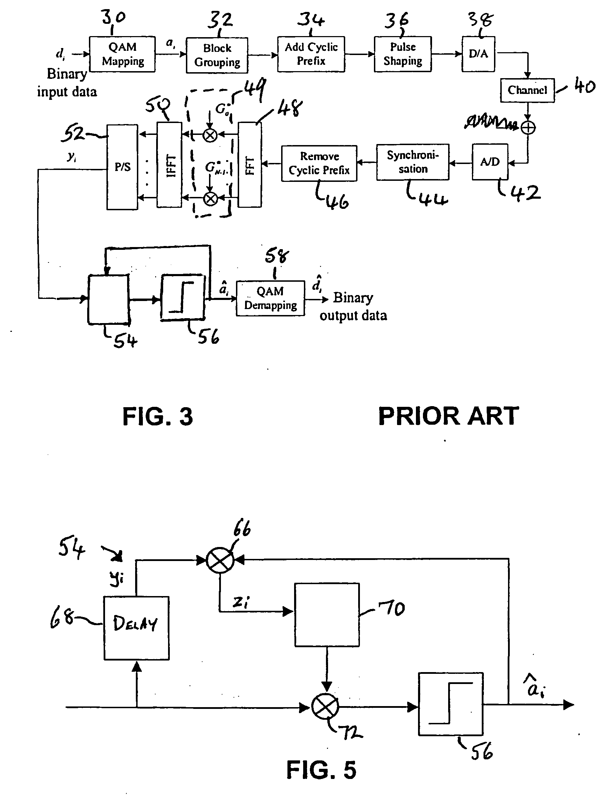

The baseband operation of the receiver is illustrated in Figure 3, which also shows the operation on the transmitter side. In the transmitter, binary input data d; is delivered to a quadrature amplitude modulation circuit (QAM) 30 to perform QAM mapping. The output symbols are then delivered to a block grouping circuit 32 which creates successive frames of symbols. A cyclic prefix is then added by circuit 34. Then, following pulse shaping and digital-to-analog conversion by respective circuits 36 and 38, the signal is transmitted to the receiver via a channel illustrated at block 40.

The received signal, which has been subjected to noise and interference, is converted into a digital signal by an analog-to-digital converter 42 and then passed to a synchronisation block 44, which determines the start of the received block of data. At the appropriate point in time the cyclic extension or guard interval is removed from a received block of data by a circuit 46 and then passed to a discrete Fourier transform stage, FFT block, to convert the signal into the frequency domain. Each bin of the output of this stage is, in block 49, multiplied by the complex conjugate of its corresponding frequency domain equaliser coefficient $G_i$ and then transformed back to the time domain in an IFFT block 50. The data is then converted to a serial stream of signal samples in a parallel-to-serial converter 52 block. This data stream is the frequency domain equalised signal $y_i$.

The symbols $y_i$ are then delivered a time domain equalisation circuit 54 for further equalisation. The equalised signals are then delivered to a symbol classifier 56. The symbol classifier 56 is arranged to convert each of the equalised symbol values at its input to the closest one of a set of predetermined symbol values. These predetermined values are then delivered to a QAM de-mapping circuit 58 in order to generate binary output data.

A prior art circuit for performing time domain equalisation using decision feedback is illustrated in Figure 4. The output of the symbol classifier 56 is delivered to a decision feedback equalisation circuit 60, which may be a transversal filter. The output of the decision feedback equalisation circuit 60 is delivered to a summer 64, which subtracts this output from the current symbol value in order to deliver to the classifier 56 symbol values which are both time domain and frequency domain equalised.

Figure 5 shows a time domain equalisation circuit which operates using a decision correction based feedback (DCF) scheme according to the present invention.

A signal z; is produced by a summer 66 which subtracts the output $\hat{a}_i$ of the symbol classifier 56 from the frequency domain equalised (FDE) output signal $y_i$ during a single symbol clock period. A delay circuit 68 synchronises the timing of the FDE symbol $y_i$ to that of its corresponding decision output $\hat{a}_i$. The delay here is to account for the latency of the symbol classifier 56, which is assumed to be of one symbol cycle.

The difference signal $z_i$ is delivered to a decision based correction feedback (DCF) block 70. This generates an output signal which is delivered to a summer 72 to modify a subsequent FDE output signal, e.g. $y_{i+1}$.

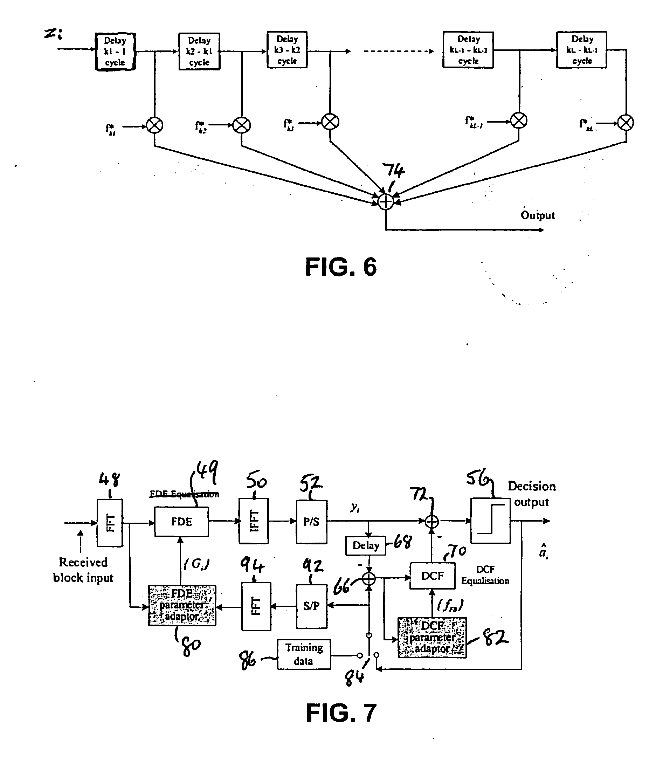

The DCF block 70 may be a transversal filter, as shown in Figure 6. The filter has multiple taps at each of which the input signal $z_i$ appears following a respective delay $k_1$, $k_2$ ... or $k_L$. The signal at each of the taps is multiplied by a respective one of a set of coefficients $f^*_{kl}$ which are the complex conjugation of DCF parameters, and then delivered to a summer 74. The summer 74 sums the modified tap outputs to generate an equalisation value which is subtracted from the value of the current FDE symbol. The variable $y_i$ can be considered as a prediction of the transmitted symbol after frequency domain equalisation with coefficients $\{G_i\}$. The feedback difference signal $z_i$ delivered to the DCF block 68 represents the amount required to 'correct' $y_i$ to its corresponding decision value. Accordingly, the scheme is referred to herein as "decision correction based feedback" equalisation.

The delay values $k_1$, $k_2$, ... $k_L$, which are integral multiples of the symbol clock period, may be variable and alterable using a training or adaptation process. Alternatively, they may have fixed values, particularly if some pre-knowledge of the channel is available. Accordingly, the output of the DCF block 70 is the sum of quantities each of which is a weighted difference value $z_i$ for a respective earlier symbol.

Using the DCF scheme, the optimisation of the frequency domain parameters $\{G_i\}$ and the time domain parameters $\{f_{FB}\}$ are decoupled, as shown later. This feature removes the constraints on parameter adaptations such as those incurred in prior art approaches, such as in the SC-FDE/DFE scheme. As a result, separable adaptation mechanisms for the two sets of parameters can be applied independently.

Figure 7 is a block diagram of the equalisation circuits of Figure 3, additionally incorporating the circuits used for training and adaptation of the parameters used for frequency domain equalisation and time domain equalisation. Two independent parameter adapters 80 and 82 are used respectively for the frequency domain equalisation parameters and the time domain equalisation parameters. Each adapter may be arranged to operate independently during a training phase and/or during normal operation.

During normal adaptation, the output of the symbol classifier 56 is delivered via a switch 84 to a serial-to-parallel converter 92 and transformed into the frequency domain by an FFT block 94. The inputs of the frequency domain equalisation parameter adapter 80 are the outputs of the FFT block 48, i.e. the non-equalised symbols transformed into the frequency domain, and the corresponding outputs from the symbol classifier. Adaptation can be performed using a least squared error approach (or any other approach as deemed appropriate).

The output of the symbol classifier 56 is also delivered, via switch 84 and summer 66, to both the DCF block 70 and the time domain equalisation parameter adapter 82 in DCF block 70. The parameter adapter 82 is arranged to adjust the coefficients $f^*_{kl}$ (using, for example, a least squared error approach) in order to cause the equalised symbol values at the input of the symbol classifier 56 to approach, as closely as possible, the output value of the classifier, i.e. to minimise the difference values received by the adapter 82. As indicated above, the parameter adapter 82 may also be arranged to adjust the delay values $k_1$, $k_2$, ... $k_L$.

Adaptation can also take place in a training phase, in which known training symbols are transmitted. In this case, the switch 84 is operated to feed training data, stored in a memory 86, to the adapters in place of the output of the symbol classifier 56.

The following mathematical description shows that, with the SC-FDE/DCF scheme, the optimisation and adaptation of the equalisers' parameters can be decoupled.

For simplicity, we will assume that the receiver is perfectly synchronised in dealing with the transmitted frames and the transmission burst starts with one or multiple training blocks in the super frame structure.

Assuming the receiver operates at a sampling rate of L-times of that of the transmitter's symbol signalling rate $1/T$, where $L \geq 1$ and T is the SC symbol period. After the CP removal, the received time domain signal corresponding to a $N$-sized block of the transmitted symbols $\{a_0, a_1, ..., a_m, ..., a_{N-1}\}$ is a $NL$-sampled block: $\{r_0, r_1, ..., r_m, ..., r_{NL-1}\}$.

Transforming the received sample block into the frequency domain via an FFT operation gives:

$$R_i = \sum_{m=0}^{NL-1} r_m e^{-j2\pi mi/NL}, \qquad i = 0, 1, ..., NL\text{-}1. \tag{1}$$

$R_i$ also satisfies:

$$R_i = H_i A_i + V_i, \qquad i = 0, 1, ..., NL\text{-}1; \tag{2}$$

where $A_i$ (transmitted data transformed to the frequency domain) and $H_i$ (sampled channel response transformed to the frequency domain) are the corresponding DFT results of $\{a_m\}$ and the channel impulse response $\{h_m\}$ zero padded to length *of NL*. $V_i$ is the noise term assumed to be zero mean and of $\sigma_n^2$ variance. That is

$$H_i = \sum_{m=0}^{NL-1} h_m e^{-j2\pi mi/NL}, \qquad i = 0, 1, ..., NL\text{-}1; \tag{3}$$

$$A_i = \sum_{m=0}^{N-1} a_m e^{-j2\pi mi/N}, \qquad i = 0, 1, ..., NL\text{-}1 \tag{4}$$

Note that, in (4), $A_i$ is the *FFT* result on the time domain *NL*-sampled sequence obtained after an expansion of a factor of *L* to the original *N*-sampled sequence $\{a_m\}$, as a consequence, it is periodical with regard to *N*, i.e. $A_i = A_{i+kN}$ *(i<N, k = 1, ..., L-1)*.

To obtain the prediction value $y_i$ in Figure 3 at the symbol rate, a decimation of the time domain samples by L is required. Reflecting this sample decimation operation in the frequency domain and applying the frequency domain equalisation gains $\{G_i\}$, the basic SC-FDE scheme yields

$$y_m = \frac{1}{N} \sum_{i=0}^{N-1} G_i^* \overline{R}_i e^{-j2\pi mi/N}, \quad m = 0, 1, ..., N\text{-}1; \tag{5}$$

where $\overline{R}_i = \dfrac{1}{L} \sum_{m=0}^{L-1} R_{i+mN}$.

The over-sampling rate (*L>1*) case gives a fractionally spaced SC-FDE equalizer that is generally considered to be more robust against symbol sampling phase misalignment due to imperfect synchronisation. Fundamentally, this is a performance enhancement consideration rather than scheme necessity.

For the DCF feedback coefficients $\{f_k\}$, $k \in F_B$, where $F_B$ is a set of non-zero indices that correspond to the transversal filter tap delays in Figure 4, assuming $k \leq P$, where P is the CP length, then the feedback is limited to the same transmitted frame.

With the SC-FDE/DCF scheme, the signal fed to the symbol discriminator is expressed as

$$z_m = y_m - \sum_{k \in F_B} f_k^* \times (a_{m-k} - y_{m-k}). \tag{6}$$

The error between this signal and the m-th transmitted symbol $a_m$ is

$$e_m = z_m - a_m = y_m - \sum_{k \in F_B} f_k^* \times (a_{m-k} - y_{m-k}) - a_m$$

$$= y_m + \sum_{k \in F_B} f_k^* y_{m-k} - a_m - \sum_{k \in F_B} f_k^* a_{m-k} \; . \qquad (7)$$

Considering the optimization issue of the equalization parameters $\{G_i\}$ and $\{f_k\}$ with regard to the criterion of minimal $\sum_{m=0}^{N-1} |e_m|^2$ (least square error), with the help of the Parseval's theorem, this time domain cost function can be transformed into the frequency domain, i.e.

$$\sum_{m=0}^{N-1} |e_m|^2 = \frac{1}{N} \sum_{i=0}^{N-1} \phi_i \phi_i^* \; ; \qquad (8)$$

where, "*" represents conjugation and $\phi_i$ is the FFT result on $e_m$:

$$\phi_i = \sum_{m=0}^{N-1} e_m e^{-j 2\pi m i / N} = \sum_{m=0}^{N-1} ( y_m + \sum_{k \in F_B} f_k^* y_{m-k} - a_m - \sum_{k \in F_B} f_k^* a_{m-k} ) e^{-j 2\pi m i / N}$$

$$= \sum_{m=0}^{N-1} (\delta(m) + \sum_{k \in F_B} f_k^* \delta(m-k)) e^{-j 2\pi k i / N} ( \sum_{m=0}^{N-1} y_m e^{-j 2\pi m i / N} - \sum_{m=0}^{N-1} a_m e^{-j 2\pi m i / N} )$$

$$= F_i^* ( G_i^* \overline{R}_i - A_i ) , \qquad i = 0, 1, ..., N-1. \qquad (9)$$

In reaching (9), the fact that the feedback components are the time domain convolutions are exploited together with equations (4) and (5). The DCF feedback coefficients are lumped into $F_i^*$ in the frequency domain:

$$F_i^* = 1 + \sum_{k \in F_B} f_k^* e^{-j 2\pi k i / N} , \quad i = 0, 1, ..., N-1. \qquad (10)$$

Placing (9) into (8), and denoting the conjugation and transpose operation as $( )^H$, there is

$$\sum_{m=0}^{N-1} |e_m|^2 = \frac{1}{N} \sum_{i=0}^{N-1} \{ F_i F_i^* ( G_i^* \overline{R}_i - A_i ) ( G_i \overline{R}_i^* - A_i^* ) \} \qquad (11)$$

Taking the derivative with regarding to $G_i$ and letting the result equal to zero, one has

$$\frac{1}{N} \sum_{i=0}^{N-1} \{ F_i F_i^* ( 2 \overline{R}_i ( G_i \overline{R}_i^* - A_i^* )) \} = 0. \qquad (12)$$

A sufficient condition for satisfying (12) is letting

$$G_i = A_i^* / \overline{R}_i^* , \text{ for } i = 0, 1, ..., N-1. \qquad (13)$$

Equation (13a) indicates that the frequency domain equalisation parameters can be determined independently without referencing the time domain DCF feedback coefficients $\{f_k\}$. If the transmitted symbols $\{a_m\}$ are independently identically distributed (i.i.d), by denoting the symbol power in the frequency domain as $\sigma_s^2$ and the noise variance as $\sigma_n^2$, i.e.

$$\mathrm{E}(A_i A_i^*) = \sigma_s^2\,; \qquad \mathrm{E}(V_i V_i^*) = \sigma_n^2\,;\ for\ i = 0,\ 1,\ ...,\ N\text{-}1,$$

the solution on $\{G_i\}$ for minimising $\mathrm{E}(|e_m|^2)$ is obtained by taking the expectation operation on the right-hand side of (13):

$$\begin{aligned}
G_i &= \mathrm{E}\{\ A_i^*/\overline{R}_i^*\ \} = \mathrm{E}\{\ \overline{R}_i\, A_i^*/(\overline{R}_i\, \overline{R}_i^*\ )\ \} \\
&= \mathrm{E}\{\ (\overline{H}_i\, A_i + V_i)\, A_i^*/((\overline{H}_i A_i + V_i)(\overline{H}_i^*\, A_i^* + V_i^*\ )\} \\
&= \overline{H}_i/[\overline{H}_i\, \overline{H}_i^* + \sigma_n^2/\sigma_s^2\,], \qquad for\ i = 0,\ 1,\ ...,\ N\text{-}1, \qquad (14)
\end{aligned}$$

where $\overline{H}_i = \dfrac{1}{L}\sum_{m=0}^{L-1} H_{i+mN}$.

The optimisation of the DCF coefficients $\{f_k\}$ follows a similar procedure. This, however, can be more conveniently carried out in the time domain wherein the parameters $\{f_k\}$ are explicit rather than the implicit expression presented in (10) in the frequency domain.

Sorting and denoting the indices in $F_B$ as $k_1 < k_2 < ... < k_L$, equation (7) can be rearranged in vector format:

$$e_m = y_m - a_m + (\bar{f}^*)'\,\varphi_m\ , \qquad (15)$$

where $(\varphi_m = [y_{m\text{-}k1} - a_{m\text{-}k1},\ y_{m\text{-}k2} - a_{m\text{-}k2},\ ...,\ y_{m\text{-}kp} - a_{m\text{-}kL}\,]'$ and $\bar{f}^* = [f^*_{k1},\ f^*_{k2},\ ...,\ f^*_{kL}]$.

$$\begin{aligned}
\sum_{m=0}^{N-1}|e_m|^2 &= ([e_{N\text{-}1},\ e_{N\text{-}2},\ ...,\ e_1,\ e_0\ ]')^H\,[e_{N\text{-}1},\ e_{N\text{-}2},\ ...,\ e_1,\ e_0\ ]' \\
&= (\bar{y} - \bar{a} + \Psi\,\bar{f}^*)^H\,(\bar{y} - \bar{a} + \Psi\,\bar{f}^*)\,, \qquad (16)
\end{aligned}$$

with $\bar{y} = [y_{N\text{-}1},\ ...,y_0]$ ; $a = [a_{N\text{-}1},\ ...,\ a_0]'$ ; and $\psi = [\varphi_{N\text{-}1},\ ...,\ \varphi_0]$. It should be noted that, in forming the vectors and the matrix in (16), the cyclical feature of the underline variables in a block causes a modular-N change whenever an index value becomes negative.

Taking the partial derivative of (16) with regard to vector $\bar{f}$ and setting it to zero, there is

$$\begin{aligned}
&2(\bar{f}'\,\Psi^H + (\bar{y})^H - (\bar{a})^H)\Psi = 0,\ \ yielding \\
&\bar{f} = (\Psi^H \Psi)^{-1}\Psi'\,(\bar{y} - \bar{a})^*. \qquad (17)
\end{aligned}$$

Equations (14) and (17) provide the decoupled least square error solution to the parameter optimisation problem of the SC-FDE/DCF scheme. With a bursty-style medium access control (MAC) protocol, which is common in WLAN systems, the initial transmitted preamble sequences (which are known to the receiver in advance) can be exploited to train the SC-FDE/DCF parameters. Online adaptation during service can also be based on these equations or their recursive versions, using the decoded data symbols as the guidance. Those who are skilled in the art will readily appreciate that the extension of (14) and (17) to their recursive versions is a straightforward task and the parameter separable feature of the SC-FDE/DCF scheme will enable flexible online adaptation strategies, such as fix $\{G_i\}$ with the training results but keep $\{f_k\}$ online adaptive, and facilitate the incorporation of other alternative parameter optimisation methods, such as gradient based learning algorithms.

**Claims**

1. A method of processing a single carrier signal containing blocks of symbols, the method comprising:

   equalising the signal in the frequency domain and converting the signal to the time domain to derive successive frequency-domain equalised symbol values;
   equalising the frequency-domain equalised symbol values in the time domain to derive successive time-domain equalised symbol values; and
   classifying the time-domain equalised symbol values into predetermined values in order to decode the symbols;

   wherein the step of equalising in the time domain comprises modifying the frequency-domain equalised symbol values by an amount which is dependent on the sum of quantities each dependent on the difference between a respective earlier frequency-domain equalised symbol value and the predetermined value into which it is classified after time-domain equalisation.

2. A method as claimed in claim 1, wherein the quantities are derived by weighting said differences according to a set of time domain equalisation coefficients.

3. A method as claimed in claim 2, wherein the frequency domain equalisation step comprises modifying the signal according to a set of frequency domain equalisation coefficients, the method including the further step of independently modifying at least one of said sets of coefficients.

4. A method as claimed in claim 3, including the step of independently modifying both sets of coefficients according to stored training data and received training signals.

5. A method as claimed in claim 3 or claim 4 including the step of independently modifying at least the set of time domain equalisation coefficients in accordance with the predetermined values into which the equalised symbols are classified.

6. A receiver for receiving a single carrier signal containing blocks of symbols, the receiver having means for processing a received signal according to a method as claimed in any one of claims 1 to 5.

Cyclic
prefix |←——— Block of N symbols ———→|

Cyclic
prefix |←——— Block of N symbols ———→|

| CP | N - P symbols | P sym | ··· | CP | N - P symbols | P sym |

Last P symbols repeated at
prefix area

|←——— Frame of the N-symbol block ———→|

## FIG. 1                    PRIOR ART

## FIG. 2                    PRIOR ART

## FIG. 4                    PRIOR ART

**FIG. 3**                                        **PRIOR ART**

**FIG. 5**

$z_i$

| Delay k1 - 1 cycle | | Delay k2 - k1 cycle | | Delay k3 - k2 cycle | | — — — — | | Delay kL-1 - kL-2 cycle | | Delay kL - kL-1 cycle |

$f^*_{k1}$ ⊗  $f^*_{k2}$ ⊗  $f^*_{k3}$ ⊗  $f^*_{kL-1}$ ⊗  $f^*_{kL}$ ⊗

74

⊕

Output

**FIG. 6**

48  49  50  52  72  56  Decision output

EDE Equalisation

FFT → FDE → IFFT → P/S  $y_i$

Received block input

$\{G_i\}$  68  Delay  70  DCF  DCF Equalisation

94  92  66

FDE parameter adaptor  ← FFT ← S/P

80

86  Training data  84

DCF parameter adaptor  82

$\{f_n\}$

$\hat{a}_i$

**FIG. 7**

**European Patent Office**

## EUROPEAN SEARCH REPORT

Application Number

EP 04 25 6383

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 101 11 496 A1 (SIEMENS AG) 19 September 2002 (2002-09-19) * paragraph [0019] - paragraph [0029] * * paragraph [0026] * * paragraph [0033] * * paragraph [0041]; figure 3 * * claims * | 1-6 | H04L25/03 |
| Y | EP 0 707 401 A (AT&T CORP) 17 April 1996 (1996-04-17) * column 4, line 37 - column 5, line 16; figure 2 * | 1-6 | |
| Y | WO 2004/021657 A (KONINKLIJKE PHILIPS ELECTRONICS N.V; BENVENUTO, NEVIO; TOMASIN, STEFAN) 11 March 2004 (2004-03-11) * figure 3 * | 1-6 | |
| Y | FALCONER D: "FREQUENCY DOMAIN EQUALIZATION FOR SINGLE-CARRIER BROADBAND WIRELESS SYSTEMS" IEEE COMMUNICATIONS MAGAZINE, IEEE SERVICE CENTER. PISCATAWAY, N.J, US, vol. 40, no. 4, April 2002 (2002-04), pages 58-66, XP001102462 ISSN: 0163-6804 * figure 5 * | 1-6 | **TECHNICAL FIELDS SEARCHED (Int.Cl.7)** H04L |

The present search report has been drawn up for all claims

| Place of search | Date of completion of the search | Examiner |
|---|---|---|
| The Hague | 16 March 2005 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 675 337 A1**

## ANNEX TO THE EUROPEAN SEARCH REPORT
## ON EUROPEAN PATENT APPLICATION NO.

EP 04 25 6383

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2005

| Patent document cited in search report | | Publication date | Patent family member(s) | | Publication date |
|---|---|---|---|---|---|
| DE 10111496 | A1 | 19-09-2002 | NONE | | |
| EP 0707401 | A | 17-04-1996 | US | 5604769 A | 18-02-1997 |
| | | | CA | 2158185 A1 | 14-04-1996 |
| | | | CN | 1123978 A | 05-06-1996 |
| | | | DE | 69530739 D1 | 18-06-2003 |
| | | | DE | 69530739 T2 | 18-03-2004 |
| | | | EP | 0707401 A2 | 17-04-1996 |
| | | | IL | 115588 A | 17-08-1999 |
| | | | JP | 3195529 B2 | 06-08-2001 |
| | | | JP | 8274724 A | 18-10-1996 |
| WO 2004021657 | A | 11-03-2004 | WO | 2004021657 A2 | 11-03-2004 |

EPO FORM P0459

For more details about this annex : see Official Journal of the European Patent Office, No. 12/82

13